# EUROPEAN PATENT APPLICATION

(11) **EP 4 852 440 A1**
(43) Date of publication of application: **09.12.2026**
(21) Application number: 26182928.7
(22) Date of filing: 03.06.2026
(51) Int. Cl.: H04N 23/68

(54) **METHOD FOR REMOVING CONTINUOUS MOTION BLUR IN MACHINE VISION SYSTEMS, CONVEYOR BELT APPLICATIONS, AND MOVING PLATFORMS**

(30) Priority: 06.06.2025 US 202519230519
(71) Applicant: Zebra Technologies Corporation, Lincolnshire, IL 60069 (US)
(72) Inventor: Vinogradov, Igor, Lincolnshire, 60069 (US); Trajkovic, Miroslav, Lincolnshire, 60069 (US)
(74) Representative: LKGLOBAL Partnerschaftsgesellschaft mbB

(57) **Abstract**

Image blur compensation systems are provided herein. An example blue compensation system includes an imaging device configured to capture images of an environment. One or more processors are configured to receive data from the one or more imaging devices and computer-executable instructions cause the system to capture one or more images of the environment, the one or more images captured during one or more respective first exposure times. The processor determines an amount of motion from the one or more images, and further determines an amount of compensation from the amount of motion. The imagine device then captures an additional image while a control circuit controls an optical element according to the determined amount of compensation, to perform blue compensation while capturing the additional image.

## Description

### BACKGROUND

In many machine vision applications, systems need to capture images of moving objects at high speed. For example, imaging items on a conveyor belt or scenes captured by cameras mounted on forklifts, robots, or other moving vehicles often result in images suffering from motion blur. This blur due to movements of objects, or movement of the imaging camera, can make important details, such as barcodes, unreadable, forcing operators to stop or repeat a process which ultimately results in slower operations which requires more time, requires additional resources, and can cost more money (e.g., worker hourly wages, use of equipment and fuel or energy, requiring additional processing to accomplish the scan or task, etc.).

One typical method to reduce motion blur is to shorten a camera sensor's exposure time. However, this reduces the amount of light captured by a camera which often results in images that are too dark, necessitating additional lighting. Adding extra illumination increases cost, energy, and spatial bulk or real estate which isn't ideal for handheld or compact systems. The additional illumination can also raise concerns about eye safety and operator annoyance. An additional technique, optical Image Stabilization (OIS) is used to counteract hand jitter by stabilizing a sensor or lens. Yet, OIS is limited when it comes to compensating for continuous motion blur, such as blur generated by sustained movement on a conveyor belt or during prolonged scanning from a moving camera, because motors employed for OIS have a limited range of motion.

As such, there is need for improved technologies for imaging of targets with relative motion due to the effects of motion blur.

### SUMMARY

Apparatuses and methods for image motion blur compensation are provided herein. In an example embodiment, a method for performing image blur due to motion includes capturing, via an imaging system, one or more images of an environment in a field of view of the imaging system, the one or more images captured during one or more respective first exposure times. The method also includes determining, via a processor, an amount of motion from the one or more images. The method also includes determining, via the processor, an amount of compensation from the amount of motion. The method also includes capturing, via the imaging system, an additional image during a second exposure time, the second exposure time being after the first exposure time. A controller then controls, while capturing the additional image, one or more parameters of an optical element according to the determined amount of compensation.

In variations of the current embodiment, capturing one or more images may include capturing one image, and determining the amount of motion may include determining an amount of motion from an image blur of the captured one imaged. extracting the speed of an object from an image with motion blur is possible, and Fourier frequency analysis can be a useful tool in this process. here's a general approach: extracting speed from motion blur identify blur parameters: motion blur occurs when the camera shutter remains open while the object moves. The blur parameters include the direction and length of the motion blur. These parameters are directly related to the object's speed use radon transform: the radon transform can help identify the direction and length of the motion blur. this method improves the accuracy of speed estimation by analyzing the blur parameters calculate speed: once the blur parameters are extracted, the speed can be estimated using the camera parameters, imaging geometry, and the length of the motion blur in addition to Fourier frequency analysis, there are several other techniques to extract the speed of an object from an image with motion blur: optical flow optical flow methods estimate the motion of objects between consecutive frames of a video.

In variations of the current embodiment, capturing one or more images includes capturing at least two images, and wherein determining an amount of motion from the at least two images comprises: identifying, via the processor, one or more targets in each of the at least two images; identifying, via the processor, positions of the one or more targets in each of the art least two images; and determining, via the processor, the amount of motion from the positions of the one or more targets in each of the at least two images.

In variations of the current embodiment, the amount of motion may include an amount of motion of a target in the field of view of the imaging system.

In variations of the current embodiment, the amount of motion may include an amount of motion of an imaging sensor of the imaging system.

In variations of the current embodiment, controlling one or more parameters of the optical element may include controlling one or more of an angle of a lens, geometry of a lens, angle of a surface of a lens, thickness of a lens, an angle of a flat plate disposed between the lens and the sensor, an angle of a flat plate in front of the lens, an angle of an of an optical surface of the lens, a position of an imaging sensor, a position of a lens, or a focus of a lens.

In variations of the current embodiment, the optical element may include at least one of a tunable lens, a variable focus lens, or a liquid lens.

In variations of the current embodiment, the amount of motion is further determined from data obtained from one or more velocity sensors.

In another example embodiment, an imaging system for performing motion blur compensation of images includes one or more imaging devices configured to capture images of an environment in respective fields of view of each respective imaging device. The system also includes one or more processors configured to receive data from the one or more imaging devices. The system further includes one or more non-transitory memories storing computer-executable instructions that, when executed via the one or more processors, cause the system to: capture, by the one or more imaging devices, one or more images of the environment, the one or more images captured during one or more respective first exposure times; determine, via a processor, an amount of motion from the one or more images; determine, via the processor, an amount of compensation from the amount of motion; capture, by the one or more imaging devices, an additional image during a second exposure time, the second exposure time being after the first exposure time; and control, via a control circuit and while capturing the additional image, one or more parameters of an optical element according to the determined amount of compensation.

In variations of the current embodiment, to capture the one or more images, the computer-executable instructions cause the system to capture one image, and where to determine the amount of motion the computer-executable instructions cause the system to determine, via the processor, an amount of motion from an image blur of the captured one imaged.

In variations of the current embodiment, to capture one or more images the computer-executable instructions cause the system to capture, by the one or more imaging devices, at least two images, and wherein to determine an amount of motion from the at least two images the computer-executable instructions cause the system to: identify, via the processor, one or more targets in each of the at least two images; identify, via the processor, positions of the one or more targets in each of the at least two images; and determine, via the processor, the amount of motion from the positions of the one or more targets in the at least two images.

In variations of the current embodiment, the one or more imaging devices may include an imaging device mounted on a mobile platform.

In variations of the current embodiment, to control one or more parameters of the optical element the computer-executable instructions cause the system to control, via the control circuit, one or more of an angle of a lens, geometry of a lens, angle of a surface of a lens, thickness of a lens, an angle of a flat plate disposed between the lens and the sensor, an angle of a flat plate in front of the lens, an angle of an of an optical surface of the lens, an angle of an imaging sensor, a thickness of a lens, a position of an imaging sensor, a position of a lens, or a focus of a lens.

In variations of the current embodiment, the optical element may include at least one of a tunable lens, a variable focus lens, or a liquid lens.

In yet another example embodiment, one or more non-transitory computer-readable media store computer-executable instructions that, when executed via one or more processors, cause one or more imaging systems to: capture, by one or more imaging devices having respective imaging fields of view, one or more images of an environment, the one or more images captured during one or more respective first exposure times; determine, via a processor, an amount of motion from the one or more images; determine, via the processor, an amount of compensation from the amount of motion; capture, by the one or more imaging devices, an additional image during a second exposure time, the second exposure time being after the first exposure times; and control, via a control circuit and while capturing the additional image, one or more parameters of an optical element according to the determined amount of compensation.

In variations of the current embodiment, to capture the one or more images, the computer-executable instructions, when executed via one or more processors, cause one or more imaging systems to capture one image, and where to determine the amount of motion the computer-executable instructions, when executed via one or more processors, cause one or more imaging systems to determine, via the processor, an amount of motion from an image blur of the captured one imaged.

In variations of the current embodiment, to capture one or more images, the computer-executable instructions, when executed via one or more processors, cause one or more imaging systems to capture, by the one or more imaging devices, at least two images, and where to determine an amount of motion from the one or more images the computer-executable instructions, when executed via one or more processors, cause one or more imaging systems to: identify, via the one or more processors, one or more targets in each of the at least two images; identify, via the one or more processors, positions of the one or more targets in the at least two images; and determine, via the one or more processors, the amount of motion from the positions of the one or more targets in the at least two images.

In variations of the current embodiment, the one or more imaging devices may include an imaging device mounted on a mobile platform.

In variations of the current embodiment, to control one or more parameters of the optical element the computer-executable instructions, when executed via one or more processors, cause one or more imaging systems to control, via a control circuit, one or more of an angle of a lens, geometry of a lens, angle of a surface of a lens, thickness of a lens, an angle of a flat plate disposed between the lens and the sensor, an angle of a flat plate in front of the lens, an angle of an of an optical surface of the lens, an angle of an imaging sensor, a position of an imaging sensor, a position of a lens, or a focus of a lens.

In variations of the current embodiment, the optical element may include at least one of a tunable lens, a variable focus lens, or a liquid lens.

### BRIEF DESCRIPTION OF THE DRAWINGS

The accompanying figures, where like reference numerals refer to identical or functionally similar elements throughout the separate views, together with the detailed description below, are incorporated in and form part of the specification, and serve to further illustrate embodiments of concepts that include the claimed invention and explain various principles and advantages of those embodiments.
FIG. 1 illustrates a block diagram of an example imaging system configured to analyze an image of a target object to execute a machine vision task, in accordance with various embodiments disclosed herein.
FIG. 2 is a side view block diagram of a first embodiment of the imaging device of FIG. 1, in accordance with embodiments described herein.
FIG. 3 is a perspective view of a second embodiment of the imaging device of FIG. 1 that may be implemented in accordance with embodiments described herein.
FIG. 4 is illustrative of an example environment with two imaging devices fixed at two positions relative to a target for obtaining multiple images of the target to perform three-dimensional imaging and dimensional reconstruction as described herein.
FIG. 5 is illustrative of an environment with a user using an imaging device to obtain multiple images of the target, with each image obtained at a different perspective of the target to perform three-dimensional reconstruction of one or more features of the target.
FIG. 6 presents a flowchart of a method for performing image motion blur compensation, in accordance with embodiments described herein.
FIG. 7A illustrates an example optical system including an image sensor and tunable optical element for performing image motion blur compensation with the optical element at an initial compensation position, in accordance with embodiments described herein.
FIG. 7B illustrates the example optical system of FIG. 7A for performing image motion blur compensation with the optical element at a second compensation position, in accordance with embodiments described herein.
FIG. 7C illustrates the example optical system of FIG. 7A for performing image motion blur compensation with the optical element at a third compensation position, in accordance with embodiments described herein.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

The apparatus and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

### DETAILED DESCRIPTION

Systems and methods are provided herein for performing image motion blur compensation by determining an amount of motion (e.g., speed, velocity, etc.) and controlling an optical element to compensate for the movement. The movement of objects across a conveyer belt for shipping, cataloguing, scanning, or performing machine vision processes is essential for modern workflows across many industries. Additionally, cameras mounted on mobile platforms (e.g., vehicles, drones, forklifts, head mounted, etc.) are increasingly used for identifying targets and performing automated functions via robotic systems. Any of these systems require either movement of targets or movement of image sensors which introduces image blur into the captured images. Such image blur can significantly impact the efficacy of tasks by reducing the speed of a workflow, or by causing errors requiring certain actions to be repeated for successful operations.

Typical systems may shorten the image sensor exposure time to reduce motion blur. Reducing the exposure time reduces the overall light captured by a sensor which causes dark images that may obscure elements and cause additional errors in performing barcode scanning or performing machine vision operations. As such, additional illumination is often required in these shortened exposure time systems. The additional illumination further requires additional power, which may not be readily available, and further requires additional space and real estate. Further, the brighter illumination may cause safety issues and concerns, or may cause eye irritation to users or individuals anywhere within the vicinity.

Improved image motion blur compensation systems and methods are described herein. The disclosed systems and methods include a method for capturing sharp images in continuous motion without the need for extremely short exposure times or additional lighting. The blur compensation methods described herein include moving an image sensor, lens, or other optical element only during image capture times of individual frames (e.g., using a global shutter sensor) and resetting the sensor, lens, or optical element to its original position or state between frames. Once reset, the system is prepared to capture a next image frame and perform the compensation enabling dynamic, real-time blur compensation based on a moving object's speed. As described herein, the amount of motion blur compensation is determined substantially from the speed of the conveyor belt or the speed of the vehicle as determined from one or more captured images.

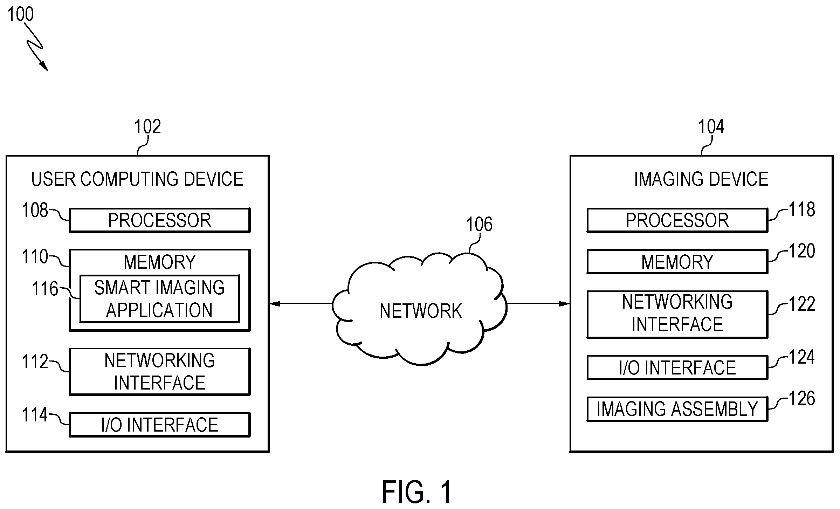

FIG. 1 illustrates an example imaging system 100 configured to perform image motion blur compensation and further analyze an image of a target object to execute a machine vision task, in accordance with various embodiments disclosed herein. Machine vision may also be referred to as computer vision for the systems and methods described herein. The imaging system 100 is configured to perform image motion blur compensation and to further process images for performing barcode scanning or machine vision processes. In the example embodiment of FIG. 1, the imaging system 100 includes a user computing device 102 and an imaging device 104 communicatively coupled via a network 106. The user computing device 102 may include one or more processors 108, one or more memories 110, a networking interface 112, an input/output (I/0) interface 114, and a smart imaging application 116. The user computing device 102 and the imaging device 104 may be capable of executing instructions to, for example, implement operations of the example methods described herein, as may be represented by the flowcharts of the drawings that accompany this description. The user computing device 102 is generally configured to enable a user/operator to create a machine vision task for execution on the imaging device 104. In examples, the imaging device 104 may utilize machine vision techniques to analyze captured images and execute a task. In other examples, the imaging device 104 may capture images and provide the images to another device such as a network, or processor, that may analyze the images and perform a machine vision task for image processing. When created, the user/operator may then transmit/ upload the machine vision task to the imaging device 104 via the network 106, where the machine vision task is then interpreted and executed.

The imaging device 104 is connected to the user computing device 102 via a network 106, and is configured to interpret and execute tasks received from the user computing device 102. Generally, the imaging device 104 may obtain a task file containing one or more task scripts from the user computing device 102 across the network 106 that may define the machine vision task and may configure the imaging device 104 to capture and/or analyze images in accordance with the task. For example, the imaging device 104 may include flash memory used for determining, storing, or otherwise processing imaging data/datasets and/or post-imaging data. The imaging device 104 may then receive, recognize, and/or otherwise interpret a trigger that causes the imaging device 104 to capture an image of the target object in accordance with the configuration established via the one or more task scripts. Once captured and/or analyzed, the imaging device 104 may transmit the images and any associated data across the network 106 to the user computing device 102 for further analysis and/or storage. In various embodiments, the imaging device 104 may be a "smart" camera and/or may otherwise be configured to automatically obtain, interpret, and execute task scripts that define machine vision tasks, such as any one or more task scripts contained in one or more task files as obtained, for example, from the user computing device 102. In examples, the imaging device 104 may be a handheld device that a user controls to capture one or more images of a target at one or more perspectives of the target for further processing of the images and for reconstruction of one or more features or dimensions of the target.

Broadly, the task file may be a JSON representation/data format of the one or more task scripts transferable from the user computing device 102 to the imaging device 104. The task file may further be loadable/readable by a C++ runtime engine, or other suitable runtime engine, executing on the imaging device 104. Moreover, the imaging device 104 may run a server (not shown) configured to receive task files across the network 106 from the user computing device 102. Additionally, or alternatively, the server configured to receive task files may be implemented as one or more cloud-based servers, such as a cloud-based computing plat- form. For example, the server may be any one or more cloud-based platform(s) such as MICROSOFT AZURE, AMAZON AWS, or the like.

The imaging device 104 may include one or more processors 118, one or more memories 120, a networking interface 122, an I/O interface 124, and an imaging assembly 126. The imaging assembly 126 may include a digital camera and/or digital video camera for capturing or taking digital images and/or frames. Each digital image may comprise pixel data, voxel data, vector information, or other image data that may be analyzed by one or more tools each configured to perform an image analysis task, such as one or more actions for performing image blur compensation as described herein. The digital camera and/or digital video camera of, e.g., the imaging assembly 126 may be configured, as disclosed herein, to take, capture, obtain, or otherwise generate digital images and, at least in some embodiments, may store such images in a memory (e.g., one or more memories 110, 120) of a respective device (e.g., user computing device 102, imaging device 104).

For example, the imaging assembly 126 may include a photo-realistic camera (not shown) for capturing, sensing, or scanning two-dimensional (2D) image data. The photo-realistic camera may be a red, green blue (RGB) based camera for capturing 2D images having RGB-based pixel data. In various embodiments, the imaging assembly may additionally include a 3D camera (not shown) for capturing, sensing, or scanning 3D image data. The 3D camera may include an Infra-Red (IR) projector and a related IR camera for capturing, sensing, or scanning 3D image data/datasets.

It should be noted that the imaging assembly 126 may capture 2D and/or 3D image data/datasets of a variety of areas, such that additional areas in addition to the predefined search spaces are contemplated herein. Moreover, in various embodiments, the imaging assembly 126 may be configured to capture other sets of image data in addition to the 2D/3D image data, such as grayscale image data or amplitude image data, each of which may be depth-aligned with the 2D/3D image data. Further, one or more ROIs may be within a FOV of the imaging system such that any region of the FOV of the imaging system may be a ROI.

The imaging device 104 may also process the 2D image data/datasets and/or 3D image datasets for use by other devices (e.g., the user computing device 102, an external server). For example, the one or more processors 118 may process the image data or datasets captured, scanned, or sensed by the imaging assembly 126. The processing of the image data may generate post-imaging data that may include metadata, simplified data, normalized data, result data, status data, or alert data as determined from the original scanned or sensed image data. The image data and/or the post-imaging data may be sent to the user computing device 102 executing the smart imaging application 116 for viewing, processing, and/or otherwise inter- action. In other embodiments, the image data and/or the post-imaging data may be sent to a server for storage or for further manipulation. As described herein, the user computing device 102, imaging device 104, and/or external server or other centralized processing unit and/or storage may store such data, and may also send the image data and/or the post-imaging data to another application implemented on a user device, such as a mobile device, a tablet, a handheld device, or a desktop device.

Each of the one or more memories 110, 120 may include one or more forms of volatile and/or non-volatile, fixed and/or removable memory, such as read-only memory (ROM), electronic programmable read-only memory (EPROM), random access memory (RAM), erasable electronic programmable read-only memory (EEPROM), and/or other hard drives, flash memory, MicroSD cards, and others. In general, a computer program or computer based product, application, or code (e.g., smart imaging application 116, or other computing instructions described herein) may be stored on a computer usable storage medium, or tangible, non-transitory computer-readable medium (e.g., standard random access memory (RAM), an optical disc, a universal serial bus (USB) drive, or the like) having such computer-readable program code or computer instructions embodied therein, wherein the computer-readable program code or computer instructions may be installed on or otherwise adapted to be executed by the one or more processors 108, 118 (e.g., working in connection with the respective operating system in the one or more memories 110, 120) to facilitate, implement, or perform the machine readable instructions, methods, processes, elements or limitations, as illustrated, depicted, or described for the various flowcharts, illustrations, diagrams, figures, and/or other disclosure herein. In this regard, the program code may be implemented in any desired program language, and may be implemented as machine code, assembly code, byte code, interpretable source code or the like (e.g., via Galang, Python, C, C++, C#, Objective-C, Java, Scala, ActionScript, JavaScript, HTML, CSS, XML, etc.).

The one or more memories 110, 120 may store an operating system (OS) (e.g., Microsoft Windows, Linux, Unix, etc.) capable of facilitating the functionalities, apps, methods, or other software as discussed herein. The one or more memories 110 may also store the smart imaging application 116, which may be configured to enable machine vision task construction, as described further herein. Additionally, or alternatively, the smart imaging application 116 may also be stored in the one or more memories 120 of the imaging device 104, and/or in an external database (not shown), which is accessible or otherwise communicatively coupled to the user computing device 102 via the network 106. The one or more memories 110, 120 may also store machine readable instructions, including any of one or more application(s), one or more software component(s), and/or one or more application programming interfaces (APIs), which may be implemented to facilitate or perform the features, functions, or other disclosure described herein, such as any methods, processes, elements or limitations, as illustrated, depicted, or described for the various flowcharts, illustrations, diagrams, figures, and/or other disclosure herein. For example, at least some of the applications, software components, or APIs may be, include, otherwise be part of, a machine vision-based imaging application, such as the smart imaging application 116, where each may be configured to facilitate their various functionalities discussed herein. It should be appreciated that one or more other applications may be envisioned and may be executed by the one or more processors 108, 118.

The one or more processors 108, 118 may be connected to the one or more memories 110, 120 via a computer bus responsible for transmitting electronic data, data packets, or otherwise electronic signals to and from the one or more processors 108, 118 and one or more memories 110, 120 to implement or perform the machine readable instructions, methods, processes, elements or limitations, as illustrated, depicted, or described for the various flowcharts, illustrations, diagrams, figures, and/or other disclosure herein.

The one or more processors 108, 118 may interface with the one or more memories 110, 120 via the computer bus to execute the operating system (OS). The one or more processors 108, 118 may also interface with the one or more memories 110, 120 via the computer bus to create, read, update, delete, or otherwise access or interact with the data stored in the one or more memories 110, 120 and/or external databases (e.g., a relational database, such as Oracle, DB2, MySQL, or a NoSQL based database, such as MongoDB). The data stored in the one or more memories 110, 120 and/or an external database may include all or part of any of the data or information described herein, including, for example, machine vision task images (e.g., images captured by the imaging device 104 in response to execution of a task script) and/or other suitable information.

The networking interfaces 112, 122 may be configured to communicate (e.g., send and receive) data via one or more external/network port(s) to one or more networks or local terminals, such as network 106, described herein. In some embodiments, networking interfaces 112, 122 may include a client-server platform technology such as ASP. NET, Java J2EE, Ruby on Rails, Node.js, a web service or online API, responsive for receiving and responding to electronic requests. The networking interfaces 112, 122 may implement the client-server platform technology that may interact, via the computer bus, with the one or more memories 110, 120 (including the applications(s), component(s), API(s), data, etc. stored therein) to implement or perform the machine readable instructions, methods, processes, elements or limitations, as illustrated, depicted, or described for the various flowcharts, illustrations, diagrams, figures, and/or other disclosure herein.

According to some embodiments, the networking interfaces 112, 122 may include, or interact with, one or more transceivers (e.g., WWAN, WLAN, and/or WPAN transceivers) functioning in accordance with IEEE standards, 3GPP standards, or other standards, and that may be used in receipt and transmission of data via external/network ports connected to network 106. In some embodiments, network 106 may comprise a private network or local area network (LAN). Additionally, or alternatively, network 106 may comprise a public network such as the Internet. In some embodiments, the network 106 may comprise routers, wire- less switches, or other such wireless connection points communicating to the user computing device 102 (via the networking interface 112) and the imaging device 104 (via networking interface 122) via wireless communications based on any one or more of various wireless standards, including by non-limiting example, IEEE 802.lla/b/c/g (WIFI), the BLUETOOTH standard, or the like.

The I/O interfaces 114, 124 may include or implement operator interfaces configured to present information to an administrator or operator and/or receive inputs from the administrator or operator. An operator interface may provide a display screen (e.g., via the user computing device 102 and/or imaging device 104) which a user/operator may use to visualize any images, graphics, text, data, features, pixels, and/or other suitable visualizations or information. For example, the user computing device 102 and/or imaging device 104 may comprise, implement, have access to, render, or otherwise expose, at least in part, a graphical user interface (GUI) for displaying images, graphics, text, data, features, pixels, and/or other suitable visualizations or information on the display screen. The I/O interfaces 114, 124 may also include I/O components (e.g., ports, capacitive or resistive touch sensitive input panels, keys, buttons, lights, LEDs, any number of keyboards, mice, USB drives, optical drives, screens, touchscreens, etc.), which may be directly/ indirectly accessible via or attached to the user computing device 102 and/or the imaging device 104. According to some embodiments, an administrator or user/operator may access the user computing device 102 and/or imaging device 104 to construct tasks, review images or other information, make changes, input responses and/or selections, and/or perform other functions.

As described above herein, in some embodiments, the user computing device 102 may perform the functionalities as discussed herein as part of a "cloud" network or may otherwise communicate with other hardware or soft- ware components within the cloud to send, retrieve, or otherwise analyze data or information described herein.

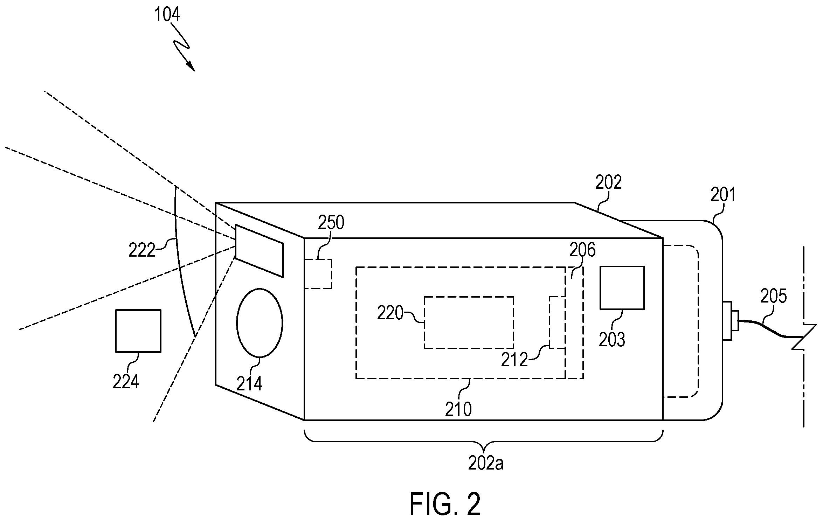

Two embodiments of imaging devices for performing image motion blue compensation, as described herein, are shown in schematics in FIGS. 2-3. Referring now to FIG. 2, the imaging device 104 includes a housing 202, an illumination system 250, and an imaging system 210 at least partially disposed within the housing 202 that includes an imaging camera assembly. Specifically, the imaging system 210 includes an image sensor 212 and a lens assembly 220. The device 104 may be adapted to be inserted into a docking station 201 which, in some examples, may include an AC power source 205 to provide power for the device 104. The device 104 may further include an onboard power supply 203, such as a battery and a printed circuit board 206 that may accommodate a memory and a controller that controls operation of the imaging system 210. In embodiments, the device 104 may include a trigger (not shown in the illustration) that is used to activate the imaging system 210 to capture an image. The device 104 may include any number of additional components such as decoding systems, processors, and/or circuitry coupled to the circuit board 206 to assist in operation of the device 104.

The housing 202 includes a forward or reading head portion 202a which supports the imaging system 210 within an interior region of the housing 202. The imaging system 210 may, but does not have to be, modular as it may be removed or inserted as a unit into the devices, allowing the ready substitution of illumination systems 250 and/or imaging systems 210 having different illumination and/or imaging characteristics (e.g., illumination systems having different illumination sources, lenses, illumination filters, illumination FOVs and ranges of FOVs, camera assemblies having different focal distances, working ranges, and imaging FOVs) for use in different devices and systems. In some examples, the field of view may be static.

The image sensor 212 may have a plurality of photosensitive elements forming a substantially flat surface and may be fixedly mounted relative to the housing 202 using any number of components and/or approaches. The image sensor 212 further has a defined central imaging axis, A, that is normal to the substantially flat surface. In some embodiments, the imaging axis A is coaxial with a central axis of the lens assembly 220. The lens assembly 220 may also be fixedly mounted relative to the housing 202 using any number of components and/or approaches. In the illustrated embodiment, the lens assembly 220 is positioned between a front aperture 214 and the image sensor 212. The front aperture 214 blocks light from objects outside of the field of view which reduces imaging problems due to stray light from objects other than the target object. Additionally, the front aperture 214 in conjunction with a one or more lenses allows for the image to form correctly on the imaging sensor 212. The lens assembly 220 may include one or more concave lenses, convex lenses, aspheric lenses, microlens arrays, tunable lenses, variable focus lenses, liquid lenses, or lenses and optical elements mounted on translatable mounts or stages. Additionally, the lens assembly 220 may further include one or more refractive plates that may be tilted to change a position of an image on the image sensor 212.

The housing 202 includes an illumination system 250 configured to illuminate a target object of interest for imaging of the target. The target may be a 1D barcode, 2D barcode, QR code, Universal Product Code (UPC) code, or another indicia indicative of the object of interest such as alphanumeric characters or other indicia. Additionally, the target may include one or more boxes, vehicles, rooms, containers, or cuboid parcels, and the imaging system 250 may be configured to capture a color image or infrared image of the one or more targets. The illumination system 250 may provide illumination to an illumination FOV 222 to enable or assist with imaging a target 224.

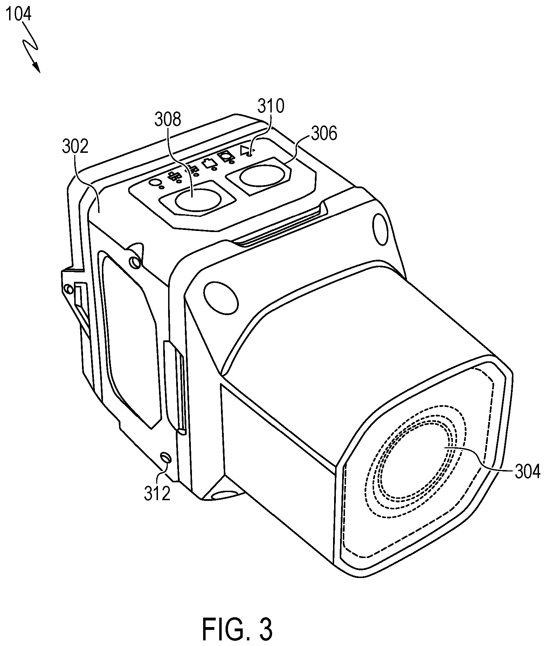

FIG. 3 is a perspective view of a second embodiment of an imaging device 104 that may be implemented in accordance with embodiments described herein. The imaging device 104 includes a housing 302, an imaging aperture 304, a user interface label 306, a dome switch/button 308, one or more light emitting diodes (LEDs) 310, and mounting point(s) 312. As previously mentioned, the imaging device 104 may obtain task files from a user computing device (e.g., user computing device 102) which the imaging device 104 thereafter interprets and executes. The instructions included in the task file may include device configuration settings (also referenced herein as "imaging settings") operable to adjust the configuration of the imaging device 104 prior to capturing images of a target object.

For example, the device configuration settings may include instructions to adjust one or more settings related to the imaging aperture 304. As an example, assume that at least a portion of the intended analysis corresponding to a machine vision task requires the imaging device 104 to maximize the brightness of any captured image. To accommodate this requirement, the task file may include device configuration settings to increase the aperture size of the imaging aperture 304. The imaging device 104 may interpret these instructions (e.g., via one or more processors 118) and accordingly increase the aperture size of the imaging aperture 304. Thus, the imaging device 104 may be configured to automatically adjust its own configuration to optimally conform to a particular machine vision task. Additionally, the imaging device 104 may include or otherwise be adaptable to include, for example but without limitation, one or more bandpass filters, one or more polarizers, one or more waveplates, one or more DPM diffusers, one or more tunable lenses, one or more adjustable refractive plates for tuning or changing an image position into the imaging device 104, one or more C-mount lenses, and/or one or more C-mount liquid lenses over or otherwise influencing the received illumination through the imaging aperture 304.

The user interface label 306 may include the dome switch/button 308 and one or more LEDs 310, and may thereby enable a variety of interactive and/or indicative features. Generally, the user interface label 306 may enable a user to trigger and/or tune the imaging device 104 (e.g., via the dome switch/button 308) and to recognize when one or more functions, errors, and/or other actions have been performed or taken place with respect to the imaging device 104 (e.g., via the one or more LEDs 310). For example, the trigger function of a dome switch/button (e.g., dome/switch button 308) may enable a user to capture an image using the imaging device 104 and/or to display a trigger configuration screen of a user application (e.g., smart imaging application 116). The trigger configuration screen may allow the user to configure one or more triggers for the imaging device 104 that may be stored in memory (e.g., one or more memories 110, 120) for use in later developed machine vision tasks, as discussed herein. The imaging device 104 may be a portable imaging device that a user may move around a target, or may be mounted on a mobile platform (e.g., forklift, vehicle, robotic drone, etc.) to obtain images of a target while in motion or at different perspectives of the target. The imaging device may further be a handheld device or a head mounted camera. The imaging device 104 may have a single field of view but the perspective of the target may change based on the position and orientation of the imaging device 104 and corresponding field of view. In more examples, a system may employ multiple imaging devices 104 with each imaging device 104 having a respective field of view with each field of view having a different perspective of a target. Therefore, each of the imaging devices may obtain an image at a different perspective for performing the methods described herein.

As another example, the tuning function of a dome switch/button (e.g., dome/switch button 308) may enable a user to automatically and/or manually adjust the configuration of the imaging device 104 in accordance with a preferred/predetermined configuration and/or to display an imaging configuration screen of a user application (e.g., smart imaging application 116). The imaging configuration screen may allow the user to configure one or more configurations of the imaging device 104 (e.g., aperture size, exposure length, blur compensation amount, etc.) that may be stored in memory (e.g., one or more memories 110, 120) for use in later developed machine vision tasks, as discussed herein.

To further this example, and as discussed further herein, a user may utilize the imaging configuration screen (or more generally, the smart imaging application 116) to establish two or more configurations of imaging settings for the imaging device 104. The user may then save these two or more configurations of imaging settings as part of a machine vision task that is then transmitted to the imaging device 104 in a task file containing one or more task scripts. The one or more task scripts may then instruct the imaging device 104 processors (e.g., one or more processors 118) to automatically and sequentially adjust the imaging settings of the imaging device 104 in accordance with one or more of the two or more configurations of imaging settings after each successive image capture. For example, one configuration may include image settings for performing barcode scanning of targets while the imaging device is stationary, or moving at a first speed, and a second configuration may include image settings for performing barcode scanning while the imaging device 104 is traveling at a second speed.

The mounting point(s) 312 may enable a user connecting and/or removably affixing the imaging device 104 to a mounting device (e.g., imaging tripod, camera mount, etc.), a structural surface (e.g., a warehouse wall, a warehouse ceiling, scanning bed or table, structural support beam, etc.), mobile platform or vehicle, other accessory items, and/or any other suitable connecting devices, structures, or surfaces. For example, the imaging device 104 may be optimally placed on a mounting device in a distribution center, manufacturing plant, warehouse, and/or other facility to image and thereby monitor the quality/consistency of products, packages, and/or other items as they pass through the imaging device's 104 FOV on a mobile platform (e.g., a fork lift, robotic done, etc.) or on a conveyer belt. Moreover, the mounting point(s) 312 may enable a user to connect the imaging device 104 to a myriad of accessory items including, but without limitation, one or more external illumination devices, one or more mounting devices/brackets, and the like.

In addition, the imaging device 104 may include several hardware components contained within the housing 302 that enable connectivity to a computer network (e.g., network 106). For example, the imaging device 104 may include a networking interface (e.g., networking interface 122) that enables the imaging device 104 to connect to a network, such as a Gigabit Ethernet connection and/or a Dual Gigabit Ethernet connection. Further, the imaging device 104 may include transceivers and/or other communication components as part of the networking interface to communicate with other devices (e.g., the user computing device 102) via, for example, Ethernet/IP, PROFINET, Mod- bus TCP, CC-Link, USB 3.0, RS-232, and/or any other suitable communication protocol or combinations thereof.

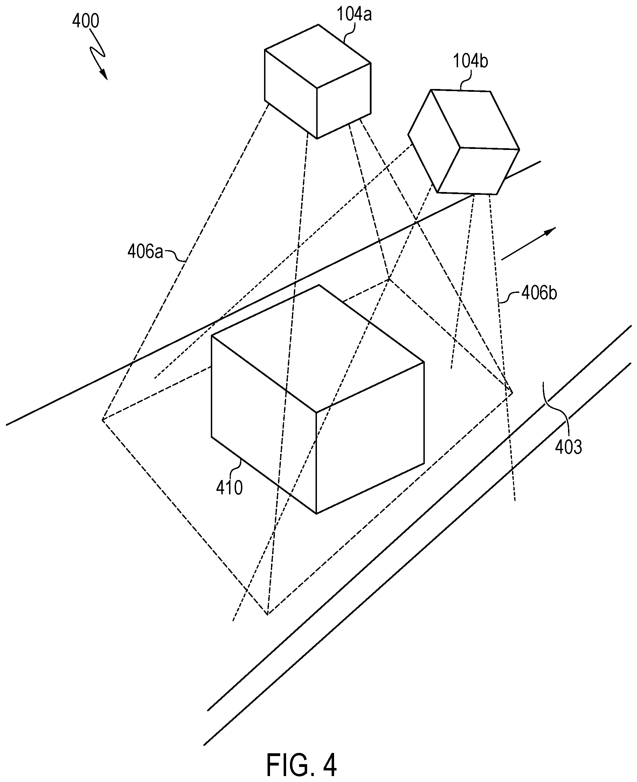

FIG. 4 is illustrative of an example environment 400 with two imaging devices 104a and 104b fixed at two positions relative to a target 410, for obtaining images of the target 410 to perform image motion blur compensation as described herein. In the environment 400 of FIG. 4 the imaging devices 104a and 104b are positioned above at different relative angles from the target 410. In implementation, the imaging devices may include one or more of the devices 104 illustrated in FIGS. 2 and 3, or may be another imaging device. As FIG. 4 illustrates, the target 410 may be disposed on a scanning surface 403 and the imaging devices 104a and 104b may be disposed and oriented such that fields of view (FOVs) 406a and 406b of the imaging devices 104a and 104b include a portion of the scanning surface 403. The scanning surface 403 may be a table, podium, mount for mounting an object or part, a conveyer, a cubby hole, or another mount or surface that may support a part or object to be scanned. As illustrated, the scanning surface 403 is a conveyer belt having an object of interest 410 thereon. The object of interest 410 is illustrated as being within the FOVs 406a and 406b of the imaging devices 104a and 104b. Each of the imaging devices 104a and 104b captures one or more images of the object of interest 410 and identifies one or more physical features of the object of interest. For example, the imaging devices 104a and 104b, or a system in communication with the imaging devices 104a and 104b, may determine a speed or velocity of the object of interest 410, and further determine a compensation amount based on the speed or velocity. The compensation amount may be a value pertaining to an amount of tilt of a lens, tilt of a plate (e.g., a refractive plate), or motion of a sensor for providing motion compensation.

In examples, each of the imaging devices 104a and 104b captures one or more images at different physical perspectives, with each of the imaging devices 104a and 104b having different FOVs of the object of interest 410. In examples, one of the imaging devices 104a or 104b may be configured to capture images for determining a motion compensation value, and the other imaging device 104a or 104b may be provided with the compensation value and may then capture images using implementing the motion compensation using the motion compensation value. As such, determining of the motion compensation, and capturing images using the image compensation value may be performed simultaneously. Further, in such an example, the image compensation value may continuously be determined for a plurality of frames over a period of time and as such, may update the image compensation value accordingly while the other imaging devices continues to capture images for further processing (e.g., barcode detection and decoding, machine vision operations, etc.) The imaging devices 104a and 104b may be mounted above or around the object of interest 410 on a ceiling, a beam, a metal tripod, or another object for supporting the position of the imaging devices 104a and 104b for capturing images of the scanning bed 403 and objects disposed thereon. Further, the imaging devices 104a and 104b may alternatively be mounted on a wall or another mount that faces objects on the scanning bed 403 from a horizontal direction. In examples, the imaging devices 104a and 104b may be mounted on any apparatus or surface for imaging and scanning objects of interest that are in, or pass through, the FOVs 406a and 406b of the imaging devices 104a and 104b.

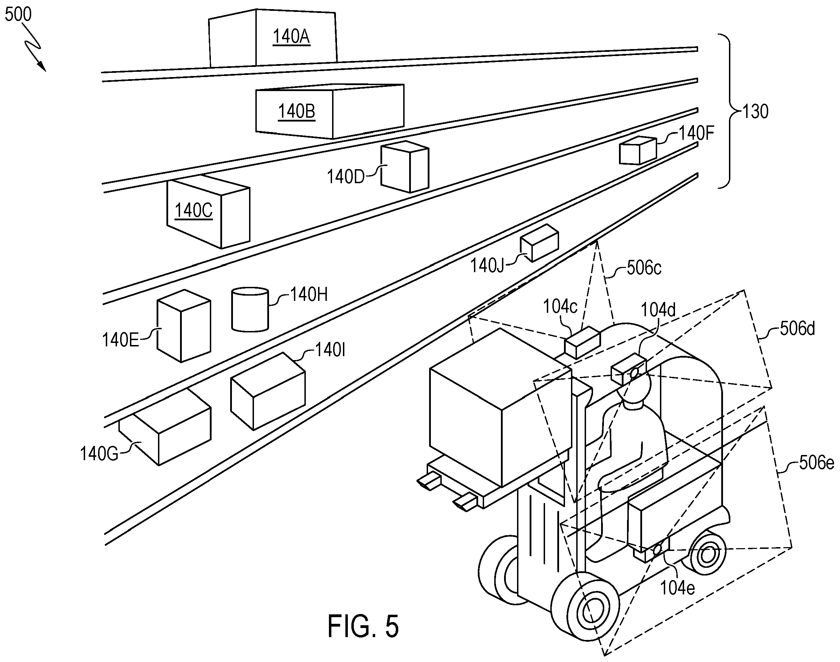

FIG. 5 is illustrative of an example environment 500 inside of a warehouse with a plurality of imaging devices 104c, 104d, and 104e fixed to a mobile platform 505 that may move through the warehouse. In the example of FIG. 5 the mobile platform 505 is a forklift, and each of the imaging devices 104c, 104d, and 104e has a different FOV 506c, 506d, and 506e, respectively. The environment 500 also includes inventory shelving 130 with various targets 140A-140J. Each of the items 140A-140J may include a barcode or other indicia that, when decoded, provides information regarding the associated item. As such, each of the items 140A-140J may be identified for storage, retrieval, or other inventory purposes by performing barcode decoding. Further, machine vision operations may be implemented to identify the items 140A-140J via identification of one or more geometric shapes of the item, alphanumeric string, words, brands, labels, or any other identifying feature. Any one of the imaging devices 104d-104e may capture images of the one or more items 104A-104J and determine a velocity of the mobile platform 505 from one or more of the capture images. For example, the imaging devices 104c-104e may perform further processing on captured images and determine a speed or velocity of the mobile platform 505 based on an amount of blur from one or more images. In other examples, the imaging devices 104c-10e may determine a speed or velocity of the mobile platform 505 by comparing the positions of items 140A-140J, or of other identified features, across a plurality of the captured images. In implementations, the processing of images and determination of the speed or velocity of the mobile platform 505 may be performed by the imaging devices 104c-104e, or may be performed by a processor or system in communication with the imaging devices 104c-104e. In further examples, the imaging devices 104c-104e may receive an indication of the speed of the mobile platform 505 from a speedometer of the mobile platform 505, and the imaging devices may then perform image motion blur compensation using the provided speed according the methods described herein.

While illustrated as having three imaging devices 104c-104e, it is envisioned that a fourth imaging device, not illustrated, would be present on the mobile platform 505 on the same side as the first imaging device 104c toward the inventory shelving 130 closer to the ground. Further, the mobile platform 505 may include fewer mobile devices (e.g., a single imaging device with a 360 FOV, or targeted FOV based on the environment and specific application), or may have additional imaging devices disposed at various positions, heights, and sides of the mobile platform 505.

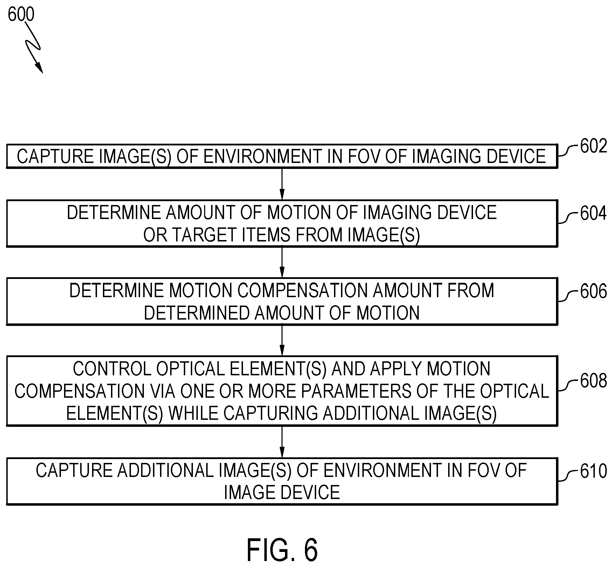

FIG. 6 presents a flowchart of a method 600 for performing image motion blur compensation according to examples described herein. The method 600 may be performed by one or more imaging systems, such as the imaging devices of FIGS. 2 and 3, and in such scenarios as presented in FIGS. 4 and 5. As such, for clarity, the method 600 will be described with reference to elements of FIGS. 1-3.

The method 600 includes capturing one or more first images of an environment in a field of view of the imaging device 104 at block 602. The first images may be captured during a first exposure time to perform image motion blur compensation in series with capturing additional images and applying the compensation to the subsequent additional images. In embodiments, the one or more images may be used to perform image motion blur compensation while simultaneously capturing additional images in parallel, with the additional images captured while implementation, and updating in real-time, the motion blur compensation. The one or more images may include images of target items for performing barcode or other indicia decoding, object identification, or other additional machine vision operations. The images may include images of a conveyer belt with target items traveling along the conveyer belt, or may include a warehouse setting with one or more imaging devices disposed on a mobile platform that moves throughout the warehouse.

At block 604, a processor, such as the processor 118, determines an amount of motion from the captured images. For example, the processor may determine the amount of motion from a single image by determining an amount of blur in the image. The amount of image blur, given a set exposure time, image sensor resolution, etc. can be used to identify the speed and/or velocity, including the directional component, of an object captured in an image. Additionally, the amount of image blur of the single image may be used to determine the speed or velocity of an imaging device, such as an imaging device on a mobile platform such as a vehicle (e.g., golf cart, forklift, automated robotic device, etc.). The processor may analyze the amount of blur of an object, and further the direction of the blur to determine a speed or velocity of a moving object or the imaging sensor. In other examples, the processor may determine the amount of motion (e.g., speed, velocity, acceleration, etc.) from multiple images. The processor may identify one or more targets or identifiable objects or features in the images and may track the position of the identified objects or features across multiple images. The motion of targets in the image, or of the imaging device, may be determined from the change in position of the identified objects or features across images taken over time. Specifically, the processor may identify target(s) in at least two images of a plurality of captured images. The processor then identifies the positions of the targets in the at least two images and determines the amount of motion from changes in the positions of the targets across the at least two images. Identifying the amount of motion using a single image, or at least two images, may apply to identifying a motion of an object or target in the FOV of an imaging device, or to identifying an amount of motion of an imaging device or sensor itself.

To determine the amount of motion from one or more images the processor may perform a spatial Fourier frequency analysis, a Radon transform, an optical flow method, a deconvolution technique, machine learning models, and image registration, among other possible techniques.

In further examples, the processor may identify the amount of motion based on data obtained by one or more velocity sensors. For example, in the implementation of FIG. 5 with the imaging device 104 disposed on a forklift, the processor may obtain the velocity or speed of the forklift from a speedometer or other velocity sensor of the forklift. The processor may then determine the amount of motion from the obtained speed or velocity data.

The processor determines an amount of motion compensation from the determined amount of motion at block606. The amount of motion compensation may be a value dependent on a specific optical element, or optical element parameter for tuning to provide the motion blur compensation. For example, the motion compensation may be provided by translating an image sensor, and the amount of compensation may be determined as an amount of distance that an image sensor is to be translated, and/or a direction that an image sensor is to be translated. In other examples, the image compensation may be provided via controlling the angle of a lens to change the position of a projected image onto an image sensor. In such examples, the amount of compensation may be an amount of angular tilt of a lens. In additional examples, the amount of compensation may include one or more of a distance or direction for translating an image sensor, a direction or distance of translating a lens, an angle of a lens, geometry of a lens, angle of a surface of a lens, thickness of a lens, an angle of a flat plate (e.g., a refractive plate), an angle of a flat plate disposed between a lens and an image sensor, an angle of a flat plate disposed in front of a lens, an angle of an optical surface of a lens (e.g., a tunable lens, a liquid lens, etc.), an angle of an imaging sensor, a thickness of a lens, a position of an imaging sensor, a position of a lens, or a focus of a lens.

A controller controls one or more parameters of an optical elements to provide the determined amount of motion compensation at block 608 and the imaging device captures additional images at block 610 while the controller provides the motion compensation. If the method 600 is performed by a single imaging device or imaging system, the additional image(s) may be captured at a second exposure time that is after the first exposure time when the first image(s) are captured. As such, the method 600 may first determine the amount of motion compensation, and the control optical elements to employ the motion compensation in capturing the subsequent additional image(s).

In other examples, multiple imaging devices may be employed to determine the amount of motion compensation using one imaging device, while other imaging devices actively capture images for indicia decoding and additional machine vision processes. In implementations, one camera or imaging device may be dedicated to the determination of the amount of motion compensation. As such, the dedicated motion compensation device may have a smaller field of view, higher spatial resolution, higher frame rate, and/or shorter exposure time to determine the amount of motion with high accuracy or greater resolution. As such, a single imaging device may have specific imaging parameters for determining the amount of motion compensation while other imaging devices are configured to have broader fields of view, and other imaging parameters to perform desired indicia decoding and machine vision processes. Employing multiple imaging devices to determine an amount of motion compensation and capture images for decoding and machine vision processes allows for multiple operations to be performed simultaneously. Additionally, the simultaneous determination of motion compensation and capturing of images for decoding and machine vision processes may enable real-time updating of the motion compensation for increased overall system performance and efficiency.

In implementations, each frame captured by a single camera, or by a dedicated imager, may be used to continuously determine motion and control optical elements to provide motion blur compensation. As such, the described systems and methods may determine motion from each captured frame, and update the determined motion compensation in real-time while additionally using the images to perform machine vision operations or decode indicia.

In examples, to provide the motion compensation, the controller may control one or more parameters of an optical element such as controlling an angle of a lens, an angle of a flat plate disposed between the lens and the sensor, an angle of a flat plate in front of the lens, an angle of an of an optical surface of a lens without change the angle of the entire lens structure, an angle of imaging sensor, a thickness of a lens, a position of an imaging sensor, a position or lateral movement of a lens, or a focus of a lens. As such, the controller may provide the compensation amount by controlling one or more translation stages, piezoelectric actuators, variable lens focuses, dielectric plates, or other optical, electrical, or mechanical devices. Once an additional image is captured, the controller may reset the one or more parameters of the optical element to prepare the optical element to provide the image blur compensation while capturing a next image.

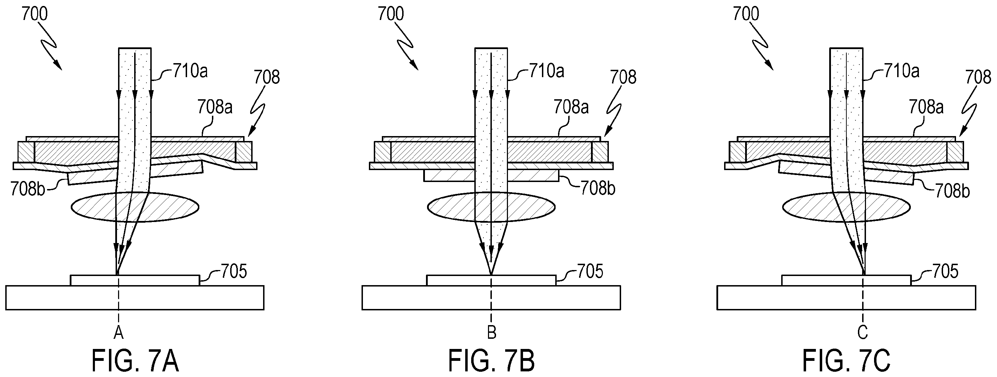

FIGS. 7A through 7C illustrate an example optical system 700 including an image sensor 705 and tunable optical element 708 for performing image motion blur compensation as described herein. The illustrated system 700 of FIGS. 7A-7C is one example, other examples including translatable sensors, tunable lenses, etc. and also envisioned. FIGS. 7A-7C provide an example of performing steering of an image 710 onto different positions on the image sensor 705. The optical element, in the provided example, is a tunable lens with a first surface 708a, on which the image 710 is incident, and a second surface 708b that is tilted using actuators to provide the image motion blur compensation. FIGS 7A - 7C illustrate how the optical elements may shift the projected image 710 over an image sensor area in sync with movement of an acquired scene. The magnification of the system determines the motion compensation range of the image on the sensor. For example, if the magnification of the imaging system is 100 and an object moves in the FOV at 50 inches per second, then the image projected on the sensor moves by 50/100 = 0.5 inches/sec. This 0.5 inches/sec is then the speed at which the sensor, or an optical element, has to move to compensate for the motion by projecting the image onto the sensor.

FIG. 7A illustrates the second surface tilted into an initial angled position guiding the image beam 710 onto a first portion A of the image sensor 705. While the image sensor 705 is active or during an exposure of the image sensor 705, the second surface 708b of the optical element 708 is tilted to a flat configuration to shift the image 710 to a second portion B on the image sensor 705, and further tilted to an angle away from the initial angled position to provide the image beam 710 to a third portion C of the image sensor 705. As illustrated, performing the image compensation by tilting the second surface 708b of the optical element 708 moves the image beam 710 across the image sensor from the first portion A to the third portion C during an exposure time during which the image sensor 705 captures an image. As such, the movement across the image sensor compensates for corresponding motion of either a target or object in a field of view of the imaging sensor 705, or compensates for movement of the image sensor 705 itself.

The above description refers to a block diagram of the accompanying drawings. Alternative implementations of the example represented by the block diagram include one or more additional or alternative elements, processes and/or devices. Additionally, or alternatively, one or more of the example blocks of the diagram may be combined, divided, re-arranged or omitted. Components represented by the blocks of the diagram are implemented by hardware, software, firmware, and/or any combination of hardware, software and/or firmware. In some examples, at least one of the components represented by the blocks is implemented by a logic circuit. As used herein, the term "logic circuit" is expressly defined as a physical device including at least one hardware component configured (e.g., via operation in accordance with a predetermined configuration and/or via execution of stored machine-readable instructions) to control one or more machines and/or perform operations of one or more machines. Examples of a logic circuit include one or more processors, one or more coprocessors, one or more microprocessors, one or more controllers, one or more Digital Signal Processors (DSPs), one or more Application Specific Integrated Circuits (ASICs), one or more Field-Programmable Gate Arrays (FPGAs), one or more microcontroller units (MCUs), one or more hardware accelerators, one or more special-purpose computer chips, and one or more System on a Chip (SoC) devices. Some example logic circuits, such as ASICs or FPGAs, are specifically configured hardware for performing operations (e.g., one or more of the operations described herein and represented by the flowcharts of this disclosure, if such are present). Some example logic circuits are hardware that executes machine-readable instructions to perform operations (e.g., one or more of the operations described herein and represented by the flowcharts of this disclosure, if such are present). Some example logic circuits include a combination of specifically configured hardware and hardware that executes machine-readable instructions. The above description refers to various operations described herein and flowcharts that may be appended hereto to illustrate the flow of those operations. Any such flowcharts are representative of example methods disclosed herein. In some examples, the methods represented by the flowcharts implement the apparatus represented by the block diagrams. Alternative implementations of example methods disclosed herein may include additional or alternative operations. Further, operations of alternative implementations of the methods disclosed herein may be combined, divided, re-arranged, and/or omitted. In some examples, the operations described herein are implemented by machine-readable instructions (e.g., software and/or firmware) stored on a medium (e.g., a tangible machine-readable medium) for execution by one or more logic circuits (e.g., processor(s)). In some examples, the operations described herein are implemented by one or more configurations of one or more specifically designed logic circuits (e.g., ASIC(s) and/or the like). In some examples the operations described herein are implemented by a combination of specifically designed logic circuit(s) and machine-readable instructions stored on a medium (e.g., a tangible machine-readable medium) for execution by logic circuit(s).

As used herein, each of the terms "tangible machine-readable medium," "non-transitory machine-readable medium" and "machine-readable storage device" is expressly defined as a storage medium (e.g., a platter of a hard disk drive, a digital versatile disc, a compact disc, flash memory, read-only memory, random-access memory, etc.) on which machine-readable instructions (e.g., program code in the form of, for example, software and/or firmware) are stored for any suitable duration of time (e.g., permanently, for an extended period of time (e.g., while a program associated with the machine-readable instructions is executing), and/or a short period of time (e.g., while the machine-readable instructions are cached and/or during a buffering process)). Further, as used herein, each of the terms "tangible machine-readable medium," "non-transitory machine-readable medium" and "machine-readable storage device" is expressly defined to exclude propagating signals. That is, as used in any claim of this patent, none of the terms "tangible machine-readable medium," "non-transitory machine-readable medium," and "machine-readable storage device" can be read to be implemented by a propagating signal.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings. Additionally, the described embodiments/examples/implementations should not be interpreted as mutually exclusive and should instead be understood as potentially combinable if such combinations are permissive in any way. In other words, any feature disclosed in any of the aforementioned embodiments/examples/implementations may be included in any of the other aforementioned embodiments/examples/implementations.

The benefits, advantages, solutions to problems, and any element(s) that may cause any benefit, advantage, or solution to occur or become more pronounced are not to be construed as a critical, required, or essential features or elements of any or all the claims. The claimed invention is defined solely by the appended claims including any amendments made during the pendency of this application and all equivalents of those claims as issued.

Moreover, in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ...a," "has ...a," "includes ...a," and/or "contains ...a," does not, without more constraints, preclude the existence of additional identical elements in the process, method, article, or apparatus that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. A device or structure that is "configured" in a certain way is configured in at least that way but may also be configured in ways that are not listed.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter may lie in less than all features of a single disclosed embodiment. Thus, the following claims are hereby incorporated into the Detailed Description, with each claim standing on its own as a separately claimed subject matter.

The following examples also form part of the present disclosure:
1. A method for performing motion blur compensation, the method comprising:
   capturing, via an imaging system, one or more images of an environment in a field of view of the imaging system, the one or more images captured during one or more respective first exposure times;
   determining, via a processor, an amount of motion from the one or more images;
   determining, via the processor, an amount of compensation from the amount of motion;
   capturing, via the imaging system, an additional image during a second exposure time, the second exposure time being after the first exposure time; and
   controlling, via a controller and while capturing the additional image, one or more parameters of an optical element according to the determined amount of compensation.
2. The method of example 1, wherein capturing one or more images comprises capturing one image, and wherein determining the amount of motion comprises determining an amount of motion from an image blur of the captured one imaged.
3. The method of example 1, wherein capturing one or more images comprises capturing at least two images, and wherein determining an amount of motion from the at least two images comprises:
   identifying, via the processor, one or more targets in each of the at least two images;
   identifying, via the processor, positions of the one or more targets in each of the at least two images; and
   determining, via the processor, the amount of motion from the positions of the one or more targets in each of the at least two images.
4. The method of example 1, wherein the amount of motion comprises an amount of motion of a target in the field of view of the imaging system.
5. The method of example 1, wherein the amount of motion comprises an amount of motion of an imaging sensor of the imaging system.
6. The method of example 1, wherein controlling one or more parameters of the optical element comprises controlling one or more of an angle of a lens, an angle of a flat plate disposed between the lens and a sensor, an angle of a flat plate in front of the lens, an angle of an of an optical surface of the lens, an angle of an imaging sensor, a thickness of a lens, a position of an imaging sensor, a position of a lens, or a focus of a lens.
7. The method of example 1, wherein the optical element comprises at least one of a tunable lens, a variable focus lens, or a liquid lens.
8. The method of example 1, wherein the amount of motion is further determined from data obtained from one or more velocity sensors.
9. An imaging system for performing motion blur compensation of images, the system comprising:
   one or more imaging devices configured to capture images of an environment in respective fields of view of each respective imaging device;
   one or more processors configured to receive data from the one or more imaging devices; and
   one or more non-transitory memories storing computer-executable instructions that, when executed via the one or more processors, cause the system to:
      capture, by the one or more imaging devices, one or more images of the environment, the one or more images captured during one or more respective first exposure times;
      determine, via a processor, an amount of motion from the one or more images;
      determine, via the processor, an amount of compensation from the amount of motion;
      capture, by the one or more imaging devices, an additional image during a second exposure time, the second exposure time being after the first exposure time; and
      control, via a control circuit and while capturing the additional image, one or more parameters of an optical element according to the determined amount of compensation.
10. The system of example 9, wherein to capture the one or more images the computer-executable instructions cause the system to capture one image, and wherein to determine the amount of motion the computer-executable instructions cause the system to determine, via the processor, an amount of motion from an image blur of the captured one imaged.
11. The system of example 9, wherein to capture one or more images the computer-executable instructions cause the system to capture, by the one or more imaging devices, at least two images, and wherein to determine an amount of motion from the at least two images the computer-executable instructions cause the system to:
   identify, via the processor, one or more targets in each of the at least two images;
   identify, via the processor, positions of the one or more targets in each of the at least two images; and
   determine, via the processor, the amount of motion from the positions of the one or more targets in the at least two images.
12. The system of example 9, wherein the one or more imaging devices comprise an imaging device mounted on a mobile platform.
13. The system of example 9, wherein to control one or more parameters of the optical element the computer-executable instructions cause the system to control, via the control circuit, one or more of an angle of a lens, an angle of a flat plate disposed between the lens and the sensor, an angle of a flat plate in front of the lens, an angle of an of an optical surface of the lens, an angle of an imaging sensor, a thickness of a lens, a position of an imaging sensor, a position of a lens, or a focus of a lens.
14. The system of example 9, wherein the optical element comprises at least one of a tunable lens, a variable focus lens, or a liquid lens.
15. One or more non-transitory computer-readable media storing computer-executable instructions that, when executed via one or more processors, cause one or more imaging systems to:
   capture, by one or more imaging devices having respective imaging fields of view, one or more images of an environment, the one or more images captured during one or more respective first exposure times;
   determine, via a processor, an amount of motion from the one or more images;
   determine, via the processor, an amount of compensation from the amount of motion;
   capture, by the one or more imaging devices, an additional image during a second exposure time, the second exposure time being after the first exposure times; and
   control, via a control circuit and while capturing the additional image, one or more parameters of an optical element according to the determined amount of compensation.
16. The one or more non-transitory computer-readable media of example 15, wherein to capture the one or more images the computer-executable instructions, when executed via one or more processors, cause one or more imaging systems to capture one image, and wherein to determine the amount of motion the computer-executable instructions, when executed via one or more processors, cause one or more imaging systems to determine, via the processor, an amount of motion from an image blur of the captured one imaged.
17. The one or more non-transitory computer-readable media of example 15, wherein to capture one or more images the computer-executable instructions, when executed via one or more processors, cause one or more imaging systems to capture, by the one or more imaging devices, at least two images, and wherein to determine an amount of motion from the one or more images the computer-executable instructions, when executed via one or more processors, cause one or more imaging systems to:
   identify, via the one or more processors, one or more targets in each of the at least two images ;
   identify, via the one or more processors, positions of the one or more targets in the at least two images; and
   determine, via the one or more processors, the amount of motion from the positions of the one or more targets in the at least two images.
18. The one or more non-transitory computer-readable media of example 15, wherein the one or more imaging devices comprise an imaging device mounted on a mobile platform.
19. The one or more non-transitory computer-readable media of example 15, wherein to control one or more parameters of the optical element the computer-executable instructions, when executed via one or more processors, cause one or more imaging systems to control, via a control circuit, one or more of an angle of a lens, an angle of a flat plate disposed between the lens and the sensor, an angle of a flat plate in front of the lens, an angle of an of an optical surface of the lens, an angle of an imaging sensor, a thickness of a lens, a position of an imaging sensor, a position of a lens, or a focus of a lens.
20. The one or more non-transitory computer-readable media of example 15, wherein the optical element comprises at least one of a tunable lens, a variable focus lens, or a liquid lens.

## Claims

1. A method for performing motion blur compensation, the method comprising:
capturing, via an imaging system, one or more images of an environment in a field of view of the imaging system, the one or more images captured during one or more respective first exposure times;
determining, via a processor, an amount of motion from the one or more images;
determining, via the processor, an amount of compensation from the amount of motion;
capturing, via the imaging system, an additional image during a second exposure time, the second exposure time being after the first exposure time; and
controlling, via a controller and while capturing the additional image, one or more parameters of an optical element according to the determined amount of compensation.

2. The method of claim 1, wherein capturing one or more images comprises capturing one image, and wherein determining the amount of motion comprises determining an amount of motion from an image blur of the captured one imaged.

3. The method of claim 1, wherein capturing one or more images comprises capturing at least two images, and wherein determining an amount of motion from the at least two images comprises:
identifying, via the processor, one or more targets in each of the at least two images;
identifying, via the processor, positions of the one or more targets in each of the at least two images; and
determining, via the processor, the amount of motion from the positions of the one or more targets in each of the at least two images.

4. The method of claim 1, wherein the amount of motion comprises an amount of motion of a target in the field of view of the imaging system.

5. The method of claim 1, wherein the amount of motion comprises an amount of motion of an imaging sensor of the imaging system.

6. The method of claim 1, wherein controlling one or more parameters of the optical element comprises controlling one or more of an angle of a lens, an angle of a flat plate disposed between the lens and a sensor, an angle of a flat plate in front of the lens, an angle of an of an optical surface of the lens, an angle of an imaging sensor, a thickness of a lens, a position of an imaging sensor, a position of a lens, or a focus of a lens.

7. The method of claim 1, wherein the optical element comprises at least one of a tunable lens, a variable focus lens, or a liquid lens.

8. The method of claim 1, wherein the amount of motion is further determined from data obtained from one or more velocity sensors.

9. An imaging system for performing motion blur compensation of images, the system comprising:
one or more imaging devices configured to capture images of an environment in respective fields of view of each respective imaging device;
one or more processors configured to receive data from the one or more imaging devices; and
one or more non-transitory memories storing computer-executable instructions that, when executed via the one or more processors, cause the system to:
capture, by the one or more imaging devices, one or more images of the environment, the one or more images captured during one or more respective first exposure times;
determine, via a processor, an amount of motion from the one or more images;
determine, via the processor, an amount of compensation from the amount of motion;
capture, by the one or more imaging devices, an additional image during a second exposure time, the second exposure time being after the first exposure time; and
control, via a control circuit and while capturing the additional image, one or more parameters of an optical element according to the determined amount of compensation.

10. The system of claim 9, wherein to capture the one or more images the computer-executable instructions cause the system to capture one image, and wherein to determine the amount of motion the computer-executable instructions cause the system to determine, via the processor, an amount of motion from an image blur of the captured one imaged.

11. The system of claim 9, wherein to capture one or more images the computer-executable instructions cause the system to capture, by the one or more imaging devices, at least two images, and wherein to determine an amount of motion from the at least two images the computer-executable instructions cause the system to:
identify, via the processor, one or more targets in each of the at least two images;
identify, via the processor, positions of the one or more targets in each of the at least two images; and
determine, via the processor, the amount of motion from the positions of the one or more targets in the at least two images.

12. The system of claim 9, wherein the one or more imaging devices comprise an imaging device mounted on a mobile platform.

13. The system of claim 9, wherein to control one or more parameters of the optical element the computer-executable instructions cause the system to control, via the control circuit, one or more of an angle of a lens, an angle of a flat plate disposed between the lens and the sensor, an angle of a flat plate in front of the lens, an angle of an of an optical surface of the lens, an angle of an imaging sensor, a thickness of a lens, a position of an imaging sensor, a position of a lens, or a focus of a lens.

14. The system of claim 9, wherein the optical element comprises at least one of a tunable lens, a variable focus lens, or a liquid lens.

15. One or more non-transitory computer-readable media storing computer-executable instructions that, when executed via one or more processors, cause one or more imaging systems to:
capture, by one or more imaging devices having respective imaging fields of view, one or more images of an environment, the one or more images captured during one or more respective first exposure times;
determine, via a processor, an amount of motion from the one or more images;
determine, via the processor, an amount of compensation from the amount of motion;
capture, by the one or more imaging devices, an additional image during a second exposure time, the second exposure time being after the first exposure times; and
control, via a control circuit and while capturing the additional image, one or more parameters of an optical element according to the determined amount of compensation.
